# EUROPÄISCHE PATENTANMELDUNG

(11) **EP 2 127 799 A1**
(43) Veröffentlichungstag der Anmeldung: **02.12.2009**
(21) Anmeldenummer: 09006770.3
(22) Anmeldetag: 20.05.2009
(51) Int. Cl.: B23K 31/00, B23K 33/00

(54) **Geschweisste Bauteile mit heftnahtfreiem Schweissen in den Nahtaussenbereichen**

(30) Priorität: 28.05.2008 DE 102008025647
(71) Anmelder: LFK-Lenkflugkörpersysteme GmbH, 86529 Schrobenhausen (DE)
(72) Erfinder: Gruss, Holger, 85653 Aying (DE)
(74) Vertreter: Hummel, Adam

(57) **Zusammenfassung**

Die Erfindung betrifft Bauteile mit einem heftnahtfreien Schweißen in den Nahtaußenbereichen, die aus mindestens zwei Werkstücken (2,3) bestehen und durch ein Schweißverfahren miteinander formschlüssig verbunden sind. Um die Heißrissneigung bei derartigen Bauteilen (2,3) im Nahtaußenbereich herabzusetzen, ist im Kantenendbereich bei mindestens einem der Werkstücke ein Spalt (4) vorhanden. Es werden so Druckeigenspannungen in der Schmelzbadumgebung reduziert und gleichzeitig die Heißrissresistenz heraufgesetzt. Gleichzeitig können auf diese Weise auch kleinere Werkstücke (2,3) mit geringerer Höhe heißrissfest geschweißt werden.

## Beschreibung

Die Erfindung betrifft ein heftnahtfreies Schweißen in den Nahtaußenbereichen von Bauteilen, die aus mindestens zwei Werkstücken bestehen und durch ein Schweißverfahren miteinander kraft- und formschlüssig verbunden sind.

Das Zusammenwirken von Reaktionskräften während des Schweißvorgangs, bei dem die gesamte Stegbreite vollständig umgeschmolzen wird, und der geringeren Struktursteifigkeit in den Stringeraußenbereichen, verursachen dort höhere heißrissrelevante Querverschiebungen als im inneren Stringerbereich. Bei kleinen Steghöhen wie im Falle der Clips, steigt das Risiko der Heißrissbildung zusätzlich. Die aus Machbarkeits- und Kostenaspekten bis heute zur Auswahl stehenden Maßnahmen zur Reduzierung dieser Heißrissbildungen konzentrieren sich insgesamt auf die metallurgische Beeinflussung des Schweißgutes in der Schweißmitte. Die Schweißnahtmitte ist der Ausgangspunkt der Rissbildung. So werden dort gezielt heißrissunterdrückende Legierungselemente, wie zum Beispiel Silizium eingebracht, um den Anteil an Restschmelze im heißrissrelevanten Zweiphasengebiet zu erhöhen.

Im Stand der Technik sind diese metallurgischen Beeinflussungen beispielsweise so realisiert worden, dass gegenwärtig durch übereutektische Schweißzusatzwerkstoffe wie AlSi25 in Form von Draht dem Schweißprozess zugeführt und damit die Heißrissresistenz heraufgesetzt wird. Mit dieser Maßnahme wächst jedoch das Risiko der Anreicherung primär ausgeschiedenem Silizium an den Nahtflanken und folglich der Schweißnahtversprühung insgesamt. Dieses kommt einer metallurgischen Kerbwirkung gleich. Es sinken somit die Duktilitätseigenschaften des Schweißguts.

Ein weiterer Ansatz, die Heißrissbildung zu unterdrücken, ist mit Formteilen aus stranggepressten Profilen, die aus AlSiX bestehen, durchgeführt worden. Diese Alternative soll zum Schweißen mit einem Schweißzusatzwerkstoff in Form von Draht erfolgen. Durch eine solche Deponierung heißrissunterdrückender Legierungselemente, wie zum Beispiel Silizium zwischen zwei zu verbindenden Werkstücken, wird sowohl das Verformungsvermögen der Schweißnaht verbessert als auch der Anteil heißrissunterdrückender Legierungselemente in der Nahtmitte und damit die Heißrisssicherheit insgesamt erhöht.

Obwohl der nominelle Gehalt an diesen heißrissunterdrückenden Bestandteilen im Schweißgut konstant bleibt, kommt es beim Drahtschweißen in Folge der seitlichen Zuführung des Schweißzusatzwerkstoffes zu einer Konzentration der Legierungselemente an den Nahtflanken sowie zu einer Ermangelung in der Nahtmitte.

Es zeigt sich jedoch, dass auch diese Vorgehensweise für AlMgX nicht umgesetzt werden kann, da die Herstellung von Formteilen aus AlMgX mit einem Mangangehalt über 5 % derzeit technisch nicht realisierbar ist. Der Grund dafür ist die hohe Werkstofffestigkeit bis zur Solidustemperatur. Wird diese Temperatur überschritten, verklebt diese Legierung in der Führung bzw. in der Matrize, was beim Herstellungsvorgang zum Abbruch des Strangpressvorganges führt. Aus diesem Grunde stehen nur Formteile aus AlSiX zur Verfügung.

Ein solches Verfahren zum Schweißen von Fügepartnern mittels stranggepressten Formteilen aus Schweißzusatzwerkstoffen sowie ein derartiges Formteil zur Verwendung beim Schweißen kann der DE 10 2004 054 346 A1 entnommen werden.

Dadurch, dass eine vor dem eigentlichen Schweißprozess vorgenommene Heftung zwischen zwei Werkstücken durchgeführt wird, wird die Bildung von Reaktionskräften gefördert. Durch die Heftung wird die Werkstoffausdehnung erhitzter Bereiche behindert. Durch diese Behinderung entstehen hohe Druckspannungen, hauptsächlich vor dem Schmelzbad und versuchen den Steg quasi wegzuschieben.

Es ist deshalb Aufgabe der Erfindung, die vor bezeichneten Nachteile aus dem Stand der Technik zu eliminieren und sicher zu stellen, dass die Heißrissbildung unterdrückt wird.

Die Aufgabe wird durch die Merkmale des Anspruches 1 gelöst.

Die Unteransprüche geben dabei eine weitere Ausgestaltung des erfindungsgemäßen Gedankens wieder.

Als Lösung wird vorgeschlagen, dass der Anfangsbereich eines Werkstückes, das mit einem zweiten Werkstück zu einem Bauteil zusammengesetzt wird, heftfrei bleibt und zugleich mit einem geringen Spalt versehen wird. Durch diese Maßnahme kann sich in diesem Bereich der Werkstoff in Folge der lokalen hohen Erhitzung ausdehnen. Dabei werden die Druckspannungen in der Schmelzbadumgebung so reduziert und die Heißrissresistenz heraufgesetzt. Durch eine derartige Maßnahme ist es möglich, dass beispielsweise bei Stoßverbindungen kleinere Steghöhen heißrissfrei geschweißt werden können.

Es zeigt sich, dass diese sogar im Falle von Querspannungen sich in Zugspannungen ändern. Dieses führt zu einer Reduzierung der Querverschiebungen im rissrelevanten Zweiphasengebiet. Hierfür ist die Herabsetzung der Struktursteifigkeit ausschlaggebend. So ist beispielsweise im Flugzeugbau oder im Schiffsbau die Verwendung interessant, bei derartigen Verbindungen, die als Stumpfstoß, T-Stoß, Eckstoß oder Mehrfachstoß ausgebildet sind. Im Flugzeugbau kann dieses beispielsweise der Bereich eines Stringers sein, dessen Verschiebungsanteil für das Heißrissverhalten entscheidend ist, denn durch den Spalt ist der Stringer gegenüber zu dem Hautblech lokal nicht starr verbunden und besitzt somit ein höheres Verformungsvermögen. Aus diesem Grunde sinken die Eigenspannungen vor dem Schmelzbad.

Es versteht sich, dass der Spalteinfluss aufgrund seiner geringen Abmaße, die vorzugsweise unterhalb des Fokusdurchmessers liegen, auf die metallurgische Schweißgutzusammensetzung sowie auf dem Schweißprozess von untergeordneter Bedeutung sind.

Es ist möglich, durch die beschriebene Vorgehensweise ein heftnahtfreies Schweißen in den Nahtaußenbereichen durchzuführen und dadurch eine Heraufsetzung der Heißrisssicherheit zu erzielen. Durch diese technische Maßnahme können auch bis heute als schweißkritisch geltende metallische Werkstoffsysteme zum Beispiel Kupfer-Aluminium-Lithiumlegierungen geschweißt werden.

Ein derartiges Schweißverfahren setzt zwar das Schweißen mit einem Schweißzusatzwerkstoff voraus, ist aber andererseits ein probates Mittel, bei gleich bleibender Schweißgutzusammensetzung auch eine höhere Risssicherheit zu erzielen und so einen hohen Qualifizierungsaufwand zu vermeiden.

Die durch ein derartiges Vorgehen hergestellten Verbindungen von Werkstücken zu einem Bauteil haben bei Schweißuntersuchungen gezeigt, dass die Spaltbreite in Abhängigkeit der Kapillardurchmesser, respektive des Fokusdurchmessers jedoch nach oben hin begrenzt sein sollte, damit ein stabiler Schweißprozess vorliegt und gute Nahtqualitäten erreicht werden.

Bei Versuchen hat sich gezeigt, dass die untere Grenze der Spaltlänge oder dergleichen durch die Schmelzbadlänge definiert wird und mindestens ihr Anderthalbfaches betragen sollte. Wird diese Forderung nicht eingehalten, entstehen aufgrund der heftnahtbedingten Kraftflüsse hohe Druckquerspannungen vor der Erstarrungsfront, die ein Wegschieben des Steges bzw. große Dehnungen im heißrissrelevanten Schmelzbadbereich zur Folge hätten.

Die vor beschriebene Erfindung lässt sich somit ohne weiteres für Metalllegierungen sowohl im Flugzeugbau als auch im Schiffsbau oder Kranbau dergleichen umsetzen. Denn gerade in diesen Bereichen werden Stumpfstöße, T-Stöße, Eckstöße und Mehrfachstöße notwendig. Durch die Erfindung wird der Ausschuss derartiger Bauteile verringert und gleichzeitig die Qualität erhöht.

Die Erfindung wird nachfolgend anhand verschiedener möglicher Ausführungsbeispiele näher erläutert. Es zeigen:
- **Fig. 1**: das Zusammenwirken zweier Werkstücke, die durch eine Heftnaht bereichsweise verbunden sind,
- **Fig. 1a**: wie Fig. 2, jedoch ist die Heftnaht und der Bereich der Spalt durch eine Schweißnaht überdeckt worden,
- **Fig. 2**: eine Stumpf-/ Stoßverbindung zweier Werkstücke
- **Fig. 2a**: wie Fig. 2, jedoch in einer Vorderansicht,
- **Fig. 3**: eine Doppel-T-Stoßverbindung in der Seitenansicht,
- **Fig. 3a**: wie Fig. 3, jedoch in einer Vorderansicht, und
- **Fig. 4**: ein Bauteil, das einen Clip aus dem Flugzeugbau darstellt.

In den nachfolgenden Figurenbeschreibungen wird ein heftnahtfreies Schweißen in den Nahtaußenbereichen von Bauteilen wiedergegeben, wobei diese Darstellungen nur schematisch ausgeführt sind.

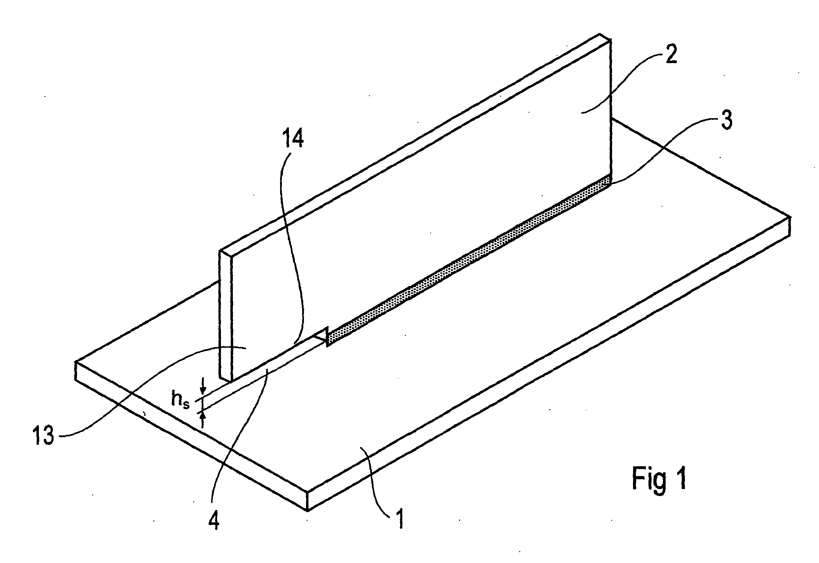

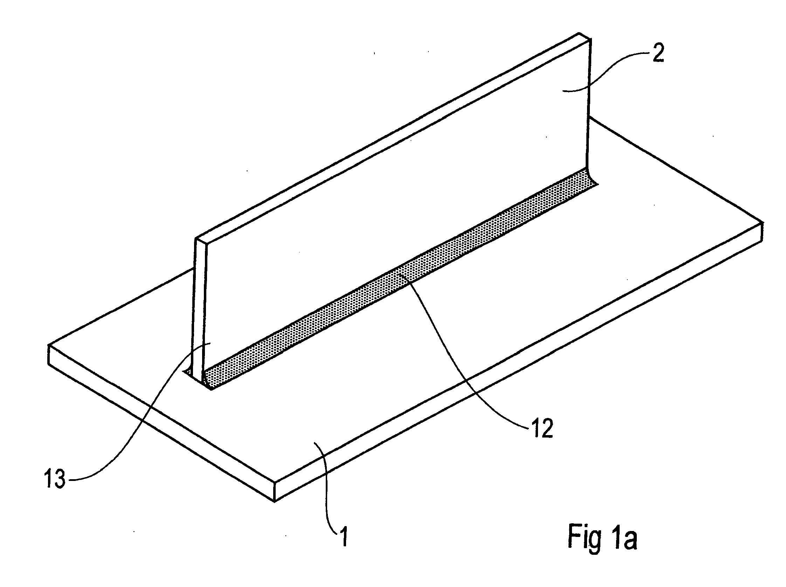

Die Darstellung der Figur 1 zeigt eine Ausführung eines T-Stoßes oder dergleichen, wo auf einem mit 1 bezeichneten Werkstück ein mit 2 bezeichnetes Werkstück aufsteht. Das mit 2 bezeichnete Werkstück ist durch eine Heftnaht 3 mit dem Werkstück 1 formschlüssig verbunden. In einem Kantenendbereich, der mit 13 bezeichnet ist und sich an der Stelle befindet, an der die Werkstückkante bereits durch die Heftnaht 3 auf dem Werkstück 1 befestigt ist, ist ein Spalt 4 zwischen dem senkrecht stehenden Werkstück 2 und dem flach liegenden Werkstück 1. Dieser Spalt dient dazu die Heißrisssicherheit im Nahtaußenbereich heraufzusetzen. Allein dadurch, dass dieser Kantenendbereich 13 heftfrei geblieben ist und keinen Kontakt mit dem Werkstück 1 aufweist, ist es sichergestellt, dass sich keine oder zumindest nur geringe Druckspannungen in der Schmelzbadumgebung aufbauen und so Heißrisse initiieren.

Die Figur 1 a zeigt, dass fertig geschweißte Bauteil, das aus den Werkstücken 1 und 2 und der ausgeführten Schweißnaht 12 besteht. Dabei ist die Schweißnaht 12 über die Heftnaht 3 gelegt.

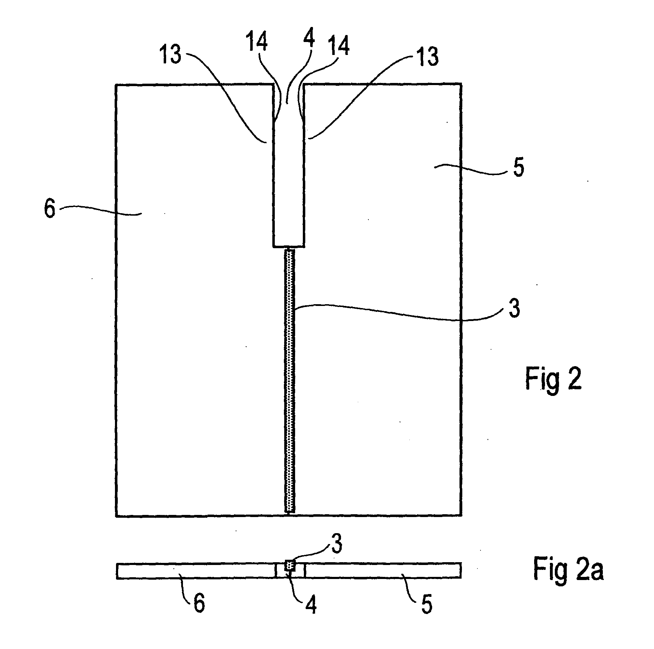

Das Ausführungsbeispiel der Figur 2 und 2a zeigt eine Schweißverbindung, die als Stumpfstoß ausgeführt werden soll. Auch in diesem Fall werden die Werkstücke 5 und 6 durch eine Heftnaht 3 miteinander verbunden. Jedoch im Kantenendbereich 13 ist auch hier an jedem der Werkstücke ein Spalt 4. Dieser Spalt 4 wird im nachträglichen Schweißvorgang mit der eigentlichen Schweißnaht 12 geschlossen und hat den Effekt, dass sich innerhalb des Kantenendbereiches 13 keine Heißrisse bilden.

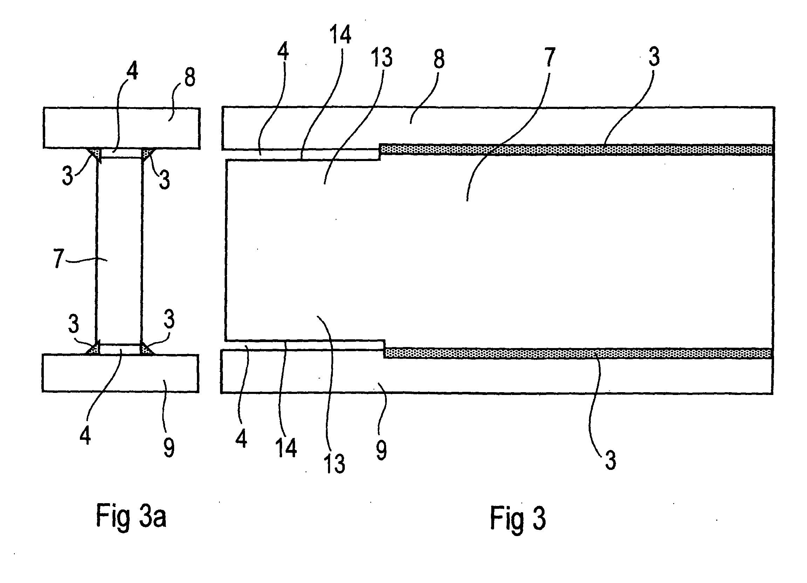

Auch bei einer Ausführung eines Bauteiles, dass als Doppel-T-Bauteil ausgeführt ist und aus den Werkstücken 7, 8 und 9 besteht, kann gemäß der Figuren 3 und 3a die gleiche Technologie verwendet werden. Auch hier befindet sich im Kantenendbereich 13 des Werkstückes 7 der bereits beschriebene Spalt 4, der durch die nachträglich nach dem Heften aufgebrachten Schweißnähte 12 geschlossen wird.

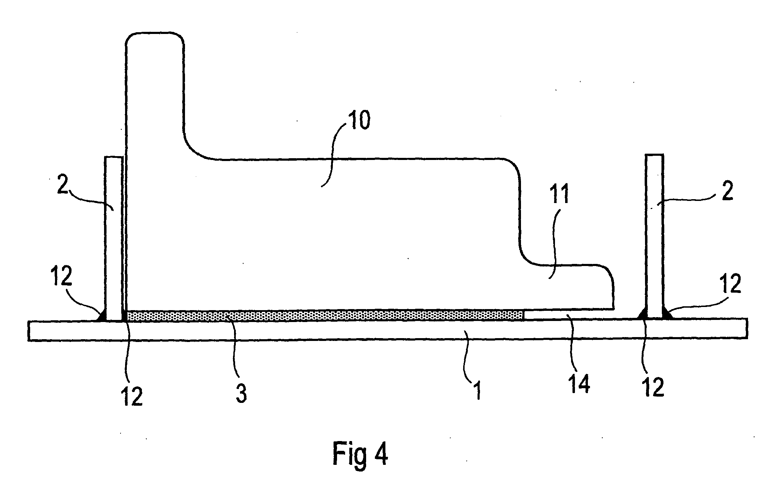

Insbesondere bei geringen Steghöhen 11, die der Figur 4 in einem Ausführungsbeispiel aus dem Flugzeugbau entnommen werden kann, wird ein Werkstück 10, das als Clip zwischen zwei Werkstücken 2, die als Stringer ausgeführt sind, dargestellt. Das Werkstück 10 wird hier auch mit dem Spalt 4 versehen. Nachträglich wird die Heftnaht 3 durch die Schweißnaht 12 überdeckt, die dann den Spalt 4 schließt. Bei dieser Ausführung ist es besonders interessant, dass die Steghöhe 11 aufgrund des Spalts 4 geringer ausfallen kann, weil gleichzeitig auch die Heißrissbildung innerhalb der Schweißnaht 12 herabgesetzt bzw. unterbunden worden ist.

### Bezugszeichenliste

- 1: Werkstück
- 2: Werkstück
- 3: Heftnaht
- 4: Spalt
- 5: Werkstück
- 6: Werkstück
- 7: Werkstück
- 8: Werkstück
- 9: Werkstück
- 10: Werkstück
- 11: Steg
- 12: Schweißnaht
- 13: Kantenendbereich
- 14: Rücksprung

## Patentansprüche

1. Heftnahtfreies Schweißen in den Nahtaußenbereichen von Bauteilen, die aus mindestens zwei Bauteilen (1, 2, 5, 6, 7, 8, 9, 10) bestehen und durch ein Schweißverfahren miteinander formschlüssig verbunden sind, **dadurch gekennzeichnet, dass** mindestens eines der Werkstücke (2, 7, 5, 6 oder 10) an einem und/oder beiden Werkstückenden in ihren Werkstückkantenbereichen, die mit dem anderen Werkstück verbunden werden sollen, einen Kantenendbereich (13) aufweisen, der keinen oder nur geringen Kontakt mit dem anderen Werkstück aufweist.

2. Heftnahtfreies Schweißen nach Anspruch 1, **dadurch gekennzeichnet, dass** der Kantenendbereich (13) einen Spalt (4) aufweist.

3. Heftnahtfreies Schweißen nach Anspruch 2, **dadurch gekennzeichnet, dass** der Werkstückkantenbereich, der nicht von dem Spalt (4) oder dergleichen erfasst ist, durch eine Heftnaht (3) oder durch Steppheftnähte mit dem zu verbindenden Werkstück (1, 2, 5, 6, 7, 8, 9, 10) verbunden ist.

4. Heftnahtfreies Schweißen nach Anspruch 2 oder 3, **dadurch gekennzeichnet, dass** die Schweißnaht des fertigen Bauteils die Heftnaht und den Spalt (4) überdeckt.

5. Heftnahtfreies Schweißen nach einem der vorhergehenden Ansprüche, **dadurch gekennzeichnet, dass** die Verbindung der Werkstücke (1, 2, 5, 6, 7, 8, 9, 10) untereinander einen Stumpfstoß oder einen T-Stoß oder einen Doppel-T-Stoß oder einen Eckstoß oder einen Mehrfachstoß oder dergleichen bildet und den Spalt (4) zwischen den Werkstücken (1, 2, 5, 6, 7, 8, 9, 10) im Endbereich (13) vor dem Schweißen der Schweißnaht (12) aufweisen.

6. Verbundenes Bauteil durch ein heftnahtfreies Schweißen in den Nahtaußenbereichen zur Verwendung im Flugzeugbau oder Schiffsbau oder Kranbau oder dergleichen.
